# EUROPÄISCHE PATENTSCHRIFT

(11) **EP 2 709 081 B1**
(45) Veröffentlichungstag und Bekanntmachung des Hinweises auf die Patenterteilung: **28.12.2016**
(21) Anmeldenummer: 12006492.8
(22) Anmeldetag: 15.09.2012
(51) Int. Cl.: G08B 29/02, G08B 21/22

(54) **Verfahren zur Überwachung der Funktionsfähigkeit eines RFID- gestützten Funkkommunikationsnetzes in einem räumlich ausgedehnten Gebiet**
Method for monitoring the functionality of an RFID supported radio communication network in a spatially extended area
Procédé de surveillance de la capacité de fonctionnement d'un réseau de communication radio pris en charge par RFID dans un domaine étendu

(43) Veröffentlichungstag der Anmeldung: 19.03.2014
(73) Patentinhaber: Identec Solutions AG, 6890 Lustenau (AT)
(72) Erfinder: Stefan, Schwiers, Dubai UAF (AE); Frank, Wehus, 4626 Kristiansand (NO)
(74) Vertreter: Riebling, Peter

(56) Entgegenhaltungen:
- WO-A1-97/48081
- WO-A2-2007/145890
- US-B1- 6 380 894

## Beschreibung

Stand der Technik ist ein RFID-gestütztes Funkkommunikationssystem mit einer Vielzahl von RFID-Tags, die mit einem oder mehreren Readern in Funkkommunikationsverbindung stehen. Die RFID-Tags übermitteln über die Funkkommunikation ihre ID-Kennungen und weitere Daten an einen stationären Reader.

Ein solches RFID-System wird z. B. für die Anwesenheitskontrolle von Arbeitern auf Ölplattformen, auf ausgedehnten Industriegeländen oder in Containerterminals verwendet, wobei in letzterem Fall jeder Container mit einem, eine individuelle Kennung tragenden Tag ausgerüstet ist. Bei diesem RFID-System wird die Art und Anordnung der Container auf dem ausgedehnten Gelände erfasst.

Auf Ölplattformen ist eine dauernde Anwesenheitskontrolle der dort beschäftigten Arbeiter notwendig. Jeder Beschäftigte trägt deshalb einen, seine individuelle Kennung tragenden RFID-Tag mit sich. Die Funkkommunikation zwischen der Vielzahl der Tags und dem einen oder mehreren stationären Readern erlaubt eine zuverlässige Erfassung der Anwesenheit und des Orts des Aufenthalts des Arbeiters.

Nachteil beim Stand der Technik ist, dass nicht immer sichergestellt werden kann, dass jeder Tag mit dem Reader in betriebssicherer und funktionsfähiger Funkkommunikation ist. Beispielsweise kann es vorkommen, dass ein RFID-System seine Funkkommunikation mit dem Tag abbricht, weil es zu einem Defekt im system kommt, oder aus anderen Gründen nicht mehr mit dem Tag kommuniziert. Es wird dann ein unerwünschter Fehlalarm ausgelöst, der jedoch nur aus dem Abbruch der Funkkommunikation herrührt, jedoch keinen Unfall des den Tag tragenden Arbeiters auf der Ölplattform bedeutet.

Bisher ist es lediglich bekannt, die Überwachung auf einige Komponenten dieses RFID-Systems zu beschränken, z. B. auf die Funktionsfähigkeit von RFID-Readern oder von einzelnen Komponenten, die mit dem RFID-Reader zusammen arbeiten.

Mit der WO 2007/145890 A2 wird beispielsweise ein Verfahren zur Überwachung der Funktionsfähigkeit eines RFID-gestützten Funkkommunikationsnetzes in einem räumlich ausgedehnten Gebiet, in dem eine Mehrzahl von RFID-Tags eine Funkkommunikation mit einem Reader ausführen, offenbart. Im Bereich des RFID-Systems ist mindestens ein ortsfest angeordneter Referenz-RFID-Tag angeordnet, der eine zyklische Funkkommunikation mit dem Reader durchführt und dessen Daten in einer Zentrale mit vorher gesendeten Daten verglichen werden.

Die WO 97/48081 offenbart ein Verfahren zur Überwachung einzelner Personen aus einer Vielzahl von Personen. Jede Person ist mit einem Tag ausgestattet, wobei die Funktionsfähigkeit der Datenübertragung anhand beispielsweise einer Zeitperiode festgestellt wird.

Nachteil der bekannten Anordnungen ist jedoch, dass nur punktuell einige Komponenten des RFID-Systems auf Funktionsfähigkeit überprüft werden konnten. Bisher war es jedoch nicht bekannt, die Funktionsfähigkeit des gesamten RFID-Systems zu überprüfen und dessen Funktion sicherzustellen.

Aufgabe der Erfindung ist daher, Fehlalarme bei Überwachung der Funkkommunikation zu vermeiden.

Demnach geht es bei der Erfindung darum, die Funktionsfähigkeit eines ausgedehnten RFID-Systems dauernd zu überprüfen, um festzustellen, ob das System selbst zusammengebrochen ist und keine Funkkommunikation mit den einzelnen Tags mehr möglich ist oder ob nur einer oder einige der Tags ausgefallen oder nicht mehr erreichbar sind.

Die Erfindung geht also von einem räumlich ausgedehnten RFID-System aus, bei dem das Problem zugrunde liegt, die Funktionsfähigkeit der gesamten funk- und leitungsgestützten Infrastruktur dauernd überprüfen zu können.

Der Erfindung sieht deshalb ein Verfahren und eine Anordnung zur Sicherstellung der Funktionsfähigkeit eines kompletten RFID-Systems vor.

Zur Lösung der gestellten Aufgabe ist die Erfindung durch die technische Lehre des Anspruches 1 gekennzeichnet.

Ein RFID-System nach der vorliegenden Erfindung besteht zumindest aus einem RFID-Reader, den dazugehörenden Funkkomponenten, den örtlich weit verstreut angeordneten Tags, die stationär und/oder mobil sein können und von dem Reader angesteuert werden und der dem RFID-Reader vorgeschalteten Antennenanordnung. Ferner besteht das RFID-System aus den Datenleitungen von den Empfangsantennen zur Zentrale und den dort angeordneten Erfassungs- und Auswertungsgeräten.

Wesentliches Merkmal der Erfindung ist, dass im Bereich des RFID-Systems ein sogenannter ortsfest angeordneter Referenz-RFID-Tag angeordnet ist, was bedeutet, dass er ortsfest an einer bestimmten Stelle des RFID-Feldes angeordnet ist und nur die Aufgabe hat, eine zyklische Kommunikation mit dem Reader aufzunehmen und entsprechend der zyklischen Kommunikationsaufnahme eine Meldung an das überwachende System abzugeben, dass er die erforderte Funkkommunikation mit dem Reader hergestellt hat und daher das Gesamtsystem in Ordnung ist. Der erfindungsgemäße Referenz-RFID-Tag überwacht sozusagen den Gesundheitszustand des gesamten RFID-Systems und zwar nicht nur die funkgestützten Komponenten, sondern auch die leitungsgebundenen Komponenten.

Die Nachricht, welche das Referenz-RFID-Tag an die Zentrale übermittelt enthält daher mindestens folgende Komponenten:
1. Die ID des Referenz-Tags
2. Die Zeit der Funkkommunikation
3. Gegebenenfalls die Feldstärke (Imark-Signal) eines Markerfeldes.
4. Gegebenenfalls die Feldstärke des TagSignals ( wird vom Reader erfasst)
5. Gegebenenfalls die Rest-Lebensdauer der verwendeten Batterie

An welchem Ort sich der stationäre Referenz-RFID-Tag befindet, ist der Zentrale bekannt. Dieser Ort wurde für den jeweiligen Referenz-RFID-Tag mit seinen Ortskoordinaten in der Zentrale eingespeichert, sodass die Zentrale neben der Auswertung der einmalig vorkommenden ID-Kennung stets weiß, mit welchem Referenz-RFID-Tag an welchem Ort sie gerade kommuniziert.

Wichtig ist die indirekte Überwachung der Empfangsfeldstärke des Referenz-RFID-Tags. Die Zentrale speichert nämlich bei jeder Funkkommunikation mit dem Referenz-RFID-Tag die von ihr (vom Reader) empfangene Feldstärke ab und vergleicht die aktuell empfangene Feldstärke mit früher empfangenen Werten. Kommt es zu einem Abfall der aktuell empfangenen Feldstärke heißt dies, dass eine Störung der Kommunikation mit dem Referenz-RFID-Tag vorliegt. Es ist nicht zwangsläufig, dass lediglich eine Störung der Funkkommunikation gegeben ist. Ebenso kann es sein, dass in den Leitungskabeln oder den Netzwerkkomponenten, über welche die Signale und Daten vom Reader an die Zentrale übertragen werden, eine Störung (z.B. eine unerwünschte Dämpfung) vorliegt. Die Zentrale wird demnach weitere Diagnoseschritte einleiten, um die durch einen Abfall der Empfangsfeldstärke des Referenz-RFID-Tags erkannte Störung aufzuklären.

In einer bevorzugten Ausgestaltung wird der Referenz-RFID-Tag in einem Stromsparmodus betrieben, was mit dem Vorteil einer besonderen Langlebigkeit der eingebauten Batterie verbunden ist. Bei ansonsten im RFID-Feld verwendeten Tags muss die Batterie nach Ablauf von einigen Wochen ausgetauscht werden.

Der erfindungsgemäße Referenz RFID-Tag wird hingegen dauernd in einem Stromsparmodus gehalten und nur zur Aufnahme der kurzen Informationsaufnahme mit der Zentrale wird der Stromsparmodus in einen Betriebsmodus geändert. Dies führt dazu, dass die Batterie des RFID-Tags bis zu mehreren Jahren hält.

Es wird außerdem bevorzugt, wenn er explosionsgeschützt ausgerüstet ist.

In der den Referenz-RFID-Tag überwachenden Zentrale wird eine Applikation gestartet, die in regelmäßigen Abständen die Funkkommunikation mit dem Referenz-RFID-Tag startet, die über den Reader empfangenen Daten auswertet und in Abhängigkeit von diesen Daten eine Diagnose über den Gesundheitszustand des gesamten Systems abgibt.

In einer Weiterbildung der vorliegenden Erfindung ist es darüber hinaus vorgesehen, dass zusätzlich ein sogenannter Marker überwacht wird. Ein solcher Marker ist ein Markierungsgerät, das ein räumlich abgegrenztes elektromagnetisches Feld in einem bestimmten geografisch abgegrenzten Gebiet des RFID-Feldes erzeugt. Damit können durch Abfrage des Referenz-RFID-Tags weitere Informationen über die Funktionsfähigkeit des Markerfeldes gewonnen werden.

Mit einem solchen Marker wird demnach ein geografisch eng begrenztes elektromagnetisches Feld im RFID-System erstellt und der Marker sendet ein charakteristisches IMark-Signal an alle RFID-Tags, die sich in diesem Markerfeld befinden. Der sich in diesem Feld befindliche Referenz-RFID-Tag sendet somit an den Reader eine zusätzliche Information, die beinhaltet, dass er sich im Markerfeld befindet. Selbstverständlich können auch Informationen gesendet werden, dass der RFID-Tag gerade das Markerfeld verlassen hat oder dass er sich außerhalb des Markerfeldes befindet. Ein Ausfall oder ein Empfang eines geschwächten IMark-Signals gibt eine Diagnose über die Qualität oder den Funktionszustand des Markerfeldes.

Der Marker erzeugt also eine zusätzliche örtliche Komponente oder Raumkomponente, wobei die sich in dieser Raumkomponente befindlichen RFID-Tags eine zusätzliche Information an den Reader abgeben.

Wesentliches Merkmal der Erfindung ist, dass auch die Anwesenheit des Markerfeldes durch den erfindungsgemäßen Referenz-Tag überwacht wird, indem dafür gesorgt wird, dass das erfindungsgemäße Referenz-RFID-Tag im Markerfeld angeordnet wird. Damit wird kontrolliert, dass der Referenz-RFID-Tag die Information, dass er sich im Markerfeld befindet, an den Reader abgibt.

Mit der Anordnung des Referenz-RFID-Tags im Markerfeld werden also zwei Vorteile erreicht. Zum Einen wird die komplette Infrastruktur des RFID-Systems überwacht und kontrolliert, und zum Zweiten wird kontrolliert, ob das Markerfeld noch funktionsfähig vorhanden ist oder nicht. Zur überwachten Infrastruktur gehören demnach nicht nur die luftgestützten Funkkommunikationswege, sondern darüber hinaus auch die Funktionsfähigkeit der Antennen, der Kabelverbindungen und der Hardware- und Software-Ausgestaltung der Zentrale und aller dazu gehörenden Komponenten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

### Es zeigen:

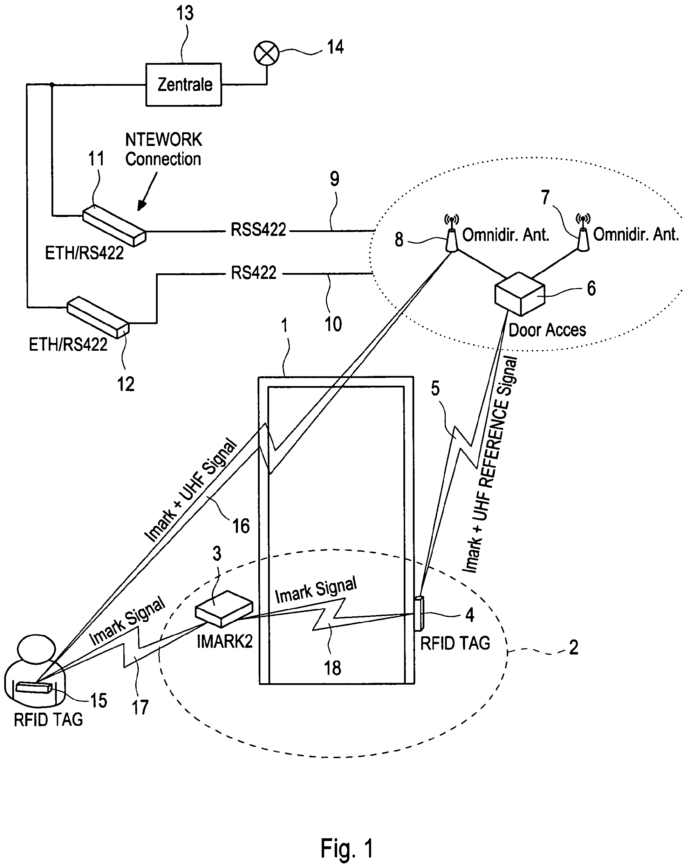

In Figur 1 ist ein Ausführungsbeispiel der Erfindung dargestellt, wobei erkennbar ist, dass z. B. im Bereich eines Zugangs 1, der z. B. als Tür oder als Tor oder als sonstiges räumliches Element ausgebildet sein kann, ein Markerfeld 2 - bevorzugt induktiv - erzeugt wird, welches von einem Marker 3 erzeugt wird.

Der Marker 3 erzeugt demnach ein räumlich eng begrenztes elektromagnetisches Feld und innerhalb und außerhalb dieses Feldes befinden sich in einer räumlichen Ausdehnung und einer nicht näher definierten Entfernung zu einem Reader 6 eine Vielzahl von RFID-Tags 15, die beispielsweise an einer Person befestigt sind.

Eine solche Anordnung kann z. B. auf einem Schiff, einer ausgedehnten Industrieanlage oder ähnlichen geografischen Umgebungen vorgesehen sein.

Der Reader 6 ist mit einer Anzahl von Antennen 7, 8 verbunden, wobei es ausreicht, dass lediglich eine Antenne 7 oder 8 vorhanden ist.

Es ist vorgesehen, dass der Reader 6 über eine drahtlose Kommunikation oder über Kabelleitungen 9, 10 mit zugeordneten Netzwerkkomponenten 11, 12 verbunden sind, die bevorzugt als Interfaces ausgebildet sind, die ihrerseits mit einer Zentrale 13 in Verbindung stehen, an der eine Alarmausgabe 14 angeordnet ist.

Wichtig ist, dass erfindungsgemäß etwa im mittleren Bereich des RFID-Feldes mindestens ein sogenannter Referenz-RFID-Tag 4 angeordnet ist, der nur die Aufgabe hat, als Referenz zu wirken und der dauernd - oder aber bevorzugt periodisch - eine Funkverbindung oder Funkkommunikation 5 mit dem Reader 6 aufnimmt, die überprüft wird.

In einer bevorzugten Ausgestaltung der Erfindung ist vorgesehen, dass nicht nur die Identität des RFID-Tags 4 übermittelt wird, sondern dass zusätzlicher Bestandteil der Funkkommunikation 5 das Markersignal (IMark) ist, welches vom Marker 3 über eine Funkkommunikation 18 als IMark-Signal an den RFID-Tag 4 gesendet wird.

Die Zentrale 13 überprüft die Übermittlung des vom Referenz-RFID-Tag 4 gesendeten UHF-Referenzsignals an den Reader 6 und überprüft somit die Funktionsfähigkeit des gesamten RFID-Systems in einem örtlich weit ausgedehnten Gebiet. Darüber hinaus überprüft die Zentrale 13 zusätzlich die Funktionsfähigkeit des Markers 3. Der Marker 3 sendet über seine Funkkommunikation mit dem Referenz-RFID-Tag 4 das IMark-Signal 18 an den Referenz-RFID-Tag 4, der seinerseits beide Datenblöcke (IMark und UHF-Referenz-Signal) über die Funkkommunikation 5 an den Reader 6 übermittelt.

Damit wird über die Funkkommunikation 5 das IMark-Signal 18 zusammen mit dem UHF-Referenz-Signal des Referenz-RFID-Tags 4 zum Reader 6 übertragen.

Es sind eine beliebige Anzahl von RFID-Tags 15 vorhanden, die z.B. mobil ausgebildet sind und beispielsweise mit einer Person verbunden sein können. Auch hier wird eine Funkkommunikation 16 von jedem RFID-Tag 15 zum Reader 6 hergestellt, wobei bedarfsweise auch bei dieser Funkkommunikation 16 das IMark-Signal mit übertragen werden kann. Dies erfolgt dadurch, dass der Marker 3 über eine Funkkommunikation 17 das IMark-Signal 18 an den mobilen RFID-Tag 15 übermittelt. Damit wird eine Entscheidung an den Reader 6 über die Funkkommunikation 16 übermittelt, die aussagt, ob sich der mobile RFID-Tag 15 innerhalb oder außerhalb des Markerfeldes 2 befindet oder z. B. das Markerfeld 2 gerade durchkreuzt hat.

Demnach ist auch hier vorgesehen, dass der mobile RFID-Tag 15 ein IMark-Signal 18 vom Markerfeld 2 erhält und dieses IMark-Signal 18 über die Kommunikation 16 an den Reader weiterleitet.

Der Referenz-RFID-Tag 4 dient demnach auch zur Überprüfung der Funktionsfähigkeit des Markers 3. Durch die Auswertung der Daten des Referenz-RFID-Tags 4 in der Zentrale 13 wird auch die Funktionsfähigkeit aller Antennen 7, 8, die Funktionsfähigkeit des Readers 6 und natürlich die Funktionsfähigkeit der Kabelleitungen 9, 10, der Netzwerkkomponenten 11, 12 und der Komponenten der Zentrale 13 überprüft.

All vorgenannten Ausführungen beziehen sich auch auf Wifi, UWB, GSM, SATCOM Tags oder ähnliche Identifikationen. Wichtig ist bei der Erfindung, dass eine Zuordnung in irgendeinem der vorgenannten Systeme zwischen einem Refernz-Tag und einer Systemverwaltung geschützt wird, unabhängig davon, dass das vorliegend beschriebene System beispielhaft als RFID-System bezeichnet wurde.

### Zeichnungslegende

- 1: Zugang
- 2: Markerfeld
- 3: Marker
- 4: Referenz-RFID-Tag
- 5: Funkkommunikation
- 6: Reader (Interrogator)
- 7: Antenne
- 8: Antenne
- 9: Kabelleitung
- 10: """
- 11: Netzwerkkomponente
- 12: ,"""
- 13: Zentrale
- 14: Alarmausgabe
- 15: RFID-Tag
- 16: Funkkommunikation
- 17: ,"""
- 18: IMark-Signal

## Patentansprüche

1. Verfahren zur Überwachung der Funktionsfähigkeit eines RFID-gestützten Funkkommunikationsnetzes in einem räumlich ausgedehnten Gebiet, in dem eine Mehrzahl von RFID-Tags (15) eine Funkkommunikation (5, 16) mit einem Reader (6) ausführen, wobei im Bereich des RFID-Systems mindestens ein ortsfest angeordneter Referenz-RFID-Tag (4) angeordnet ist, der eine zyklische Funkkommunikation (5) mit dem Reader (6) durchführt und dessen Daten in einer Zentrale (13) mit vorher gesendeten Daten verglichen werden, **dadurch gekennzeichnet, dass** durch den Referenz-RFID-Tag (4) ein Markerfeld, welches eine zusätzliche örtliche Komponente erzeugt, überwacht wird.

2. Verfahren nach Anspruch 1, **dadurch gekennzeichnet, dass** der Referenz-RFID-Tag (4) mindestens folgende Daten an die Zentrale (13) übermittelt:
1. Die ID des Referenz-Tags
2. Die Zeit der Funkkommunikation
3. Die Rest-Lebensdauer der verwendeten Batterie, sofern Batterien verwendet werden

3. Verfahren nach einem der Ansprüche 1 bis 2, **dadurch gekennzeichnet, dass** eine indirekte Überwachung der Empfangsfeldstärke des Referenz-RFID-Tags (4) dadurch stattfindet, dass die Zentrale (13) bei der Funkkommunikation (5) mit dem Referenz-RFID-Tag (4), die von ihr empfangene Feldstärke der Funkkommunikation (5) abspeichert und die aktuell empfangene Feldstärke mit früher empfangenen Werten vergleicht.

4. Verfahren nach einem der Ansprüche 1 bis 3, **dadurch gekennzeichnet, dass** der Referenz-RFID-Tag (4) in einem Stromspar-Modus betrieben wird, der lediglich zur zyklischen Aufnahme der Funkkommunikation (5) mit dem Reader (6) unterbrochen wird.

5. Verfahren nach einem der Ansprüche 1 bis 4, **dadurch gekennzeichnet, dass** der Referenz-RFID-Tag (4) zusätzlich die Feldstärke (Imark-Signal) eines Markerfeldes (2) an die Zentrale (13) übermittelt.

6. Verfahren nach einem der Ansprüche 1 bis 5, **dadurch gekennzeichnet, dass** im Bereich des RFID-Feldes mindestens ein Referenz-RFID-Tag (4) angeordnet ist, der als Referenz periodisch eine Funkkommunikation (5) mit dem Reader (6) aufnimmt, die überprüft wird.

7. Verfahren nach einem der Ansprüche 1 bis 6, **dadurch gekennzeichnet, dass** der Referenz-RFID-Tag (4) die dauernde Funktionsfähigkeit des gesamten RFID-Systems in einem örtlich weit ausgedehnten Gebiet überprüft, und zusätzlich die Funktionsfähigkeit des Markers (3), der über eine Funkkommunikation (18) das IMark-Signal (18) an den Referenz-RFID-Tag (4) übermittelt, der seine Daten (UHF-Referenz-Signal und das IMark-Signal (18)) an die Zentrale (13) übermittelt.

8. Vorrichtung zur Überwachung der Funktionsfähigkeit eines RFID-gestützten Funkkommunikationsnetzes in einem räumlich ausgedehnten Gebiet, in dem eine Mehrzahl von RFID-Tags (15) eine Funkkommunikation (5, 16) mit einem Reader (6) ausführen, wobei im Bereich des RFID-Systems mindestens ein ortsfest angeordneter Referenz-RFID-Tag (4) angeordnet ist, der eine zyklische Funkkommunikation (5) mit dem Reader (6) durchführt und dessen Daten in einer Zentrale (13) mit vorher gesendeten Daten verglichen werden, **dadurch gekennzeichnet, dass** durch den Referenz-RFID-Tag (4) ein Markerfeld, welches eine zusätzliche örtliche Komponente erzeugt, überwacht wird.

9. Vorrichtung zur Ausführung des Verfahrens nach mindestens einem der Ansprüche 1 bis 7, **dadurch gekennzeichnet, dass** durch die Auswertung der Daten des Referenz-RFID-Tags (4) in der Zentrale (13) die Funktionsfähigkeit von Antennen (7, 8), die Funktionsfähigkeit des Readers (6) und die Funktionsfähigkeit der Kabelleitungen (9, 10), der Netzwerkkomponenten (11, 12) und der Komponenten der Zentrale (13) überprüfbar sind.

## Claims

1. Method for monitoring the functionality of an RFID-based radio communications network in a spatially extended area in which a plurality of RFID tags (15) effect a radio communication (5, 16) with a reader (6), wherein there is at least one reference RFID tag (4) which is arranged in a fixed location in the area of the RFID system and effects a cyclic radio communication (5) with the reader (6) and the data of which is compared with data sent previously in a central unit (13), **characterised in that** a marker field which produces an additional local component is monitored by the reference RFID tag (4).

2. Method according to claim 1, **characterised in that** the reference RFID tag (4) transmits at least the following data to the central unit (13):
1. the ID of the reference tag
2. the time of the radio communication
3. the remaining life of the battery being used when batteries are employed.

3. Method according to one of claims 1 to 2, **characterised in that** indirect monitoring of the reception field strength of the reference RFID tag (4) is carried out in that during the radio communication (5) with the reference RFID tag (4) the central unit (13) stores the field strength of the radio communication (5) received by it and compares the currently received field strength with values received earlier.

4. Method according to one of claims 1 to 3, **characterised in that** the reference RFID tag (4) is operated in a power-saving mode which is only interrupted for cyclic effecting of the radio communication (5) with the reader (6).

5. Method according to one of claims 1 to 4, **characterised in that** the reference RFID tag (4) additionally transmits the field strength (Imark signal) of a marker field (2) to the central unit (13).

6. Method according to one of claims 1 to 5, **characterised in that** there is at least one reference RFID tag (4) which is arranged in the area of the RFID field and which as reference periodically effects a radio communication (5) with the reader (6) which is checked.

7. Method according to one of claims 1 to 6, **characterised in that** the reference RFID tag (4) checks the ongoing functionality of the entire RFID system in a locally wide spread area, and in addition the functionality of the marker (3) which through a radio communication (18) transmits the Imark signal (18) to the reference RFID tag (4) which transmits its data (UHF reference signal and the Imark signal (18)) to the central unit (13).

8. Device for monitoring the functionality of an RFID-based radio communications network in a spatially extended area in which a plurality of RFID tags (15) effect a radio communication (5, 16) with a reader (6), wherein there is at least one reference RFID tag (4) which is arranged in a fixed location in the area of the RFID system and effects a cyclic radio communication (5) with the reader (6) and the data of which is compared with data sent previously in a central unit (13), **characterised in that** a marker field which produces an additional local component is monitored by the reference RFID tag (4).

9. Device for implementing the method according to at least one of claims 1 to 7, **characterised in that** the functionality of antennas (7, 8), the functionality of the reader (6) and the operating ability of the cable lines (9. 10), of the network components (11, 12) and of the components of the central unit (13) can be checked by evaluating the data of the reference RFID tag (4) in the central unit (13).

## Revendications

1. Procédé de surveillance de la capacité de fonctionnement d'un réseau de communication radio à identification par radiofréquence (RFID) dans une zone étendue dans l'espace dans laquelle plusieurs étiquettes RFID (15) établissent une communication radio (5, 16) avec un lecteur (6), étant précisé que dans la zone du système RFID est disposée au moins une étiquettes RFID de référence (4), fixe, qui établit une communication radio cyclique (5) avec le lecteur (6) et dont les données sont comparées dans un central (13) à des données envoyées précédemment,
**caractérisé en ce qu'**un champ de marqueur qui génère un composant local supplémentaire est surveillé grâce à l'étiquette RFID de référence (4).

2. Procédé selon la revendication 1, **caractérisé en ce que** l'étiquette RFID de référence (4) transmet au moins les données suivantes au central (13):
1. l'ID de l'étiquette de référence
2. l'heure de la communication radio
3. la durée de vie restante de la batterie utilisée, dans la mesure où des batteries sont utilisées.

3. Procédé selon l'une des revendications 1 à 2, **caractérisé en ce qu'**une surveillance indirecte de l'intensité de champ de réception de l'étiquette RFID de référence (4) a lieu grâce au fait que le central (13), lors de la communication radio (5) avec l'étiquette de référence (4), met en mémoire l'intensité de champ, reçue par lui, de la communication radio (5), et compare l'intensité actuellement reçue à des valeurs reçues plus tôt.

4. Procédé selon l'une des revendications 1 à 3, **caractérisé en ce que** l'étiquette RFID de référence (4) fonctionne dans un mode d'économie d'énergie qui est seulement interrompu pour l'établissement cyclique de la communication radio (5) avec le lecteur (6).

5. Procédé selon l'une des revendications 1 à 4, **caractérisé en ce que** l'étiquette RFID de référence (4) transmet en supplément l'intensité de champ (signal Imark) d'un champ de marqueur (2) au central (13).

6. Procédé selon l'une des revendications 1 à 5, **caractérisé en ce que** dans la zone du champ RFID est disposée au moins une étiquette RFID de référence (4) qui établit périodiquement comme référence une communication radio (5) avec le lecteur (6), qui est vérifiée.

7. Procédé selon l'une des revendications 1 à 6, **caractérisé en ce que** l'étiquette RFID de référence (4) vérifie la capacité de fonctionnement durable de tout le système RFID dans une zone très étendue localement, et en même temps la capacité de fonctionnement du marqueur (3) qui transmet par l'intermédiaire d'une communication radio (18) le signal lmark (18) à l'étiquette RFID de référence (4), qui transmet ses données (signal de référence UHF et le signal lMark (18)) au central (13).

8. Dispositif de surveillance de la capacité de fonctionnement d'un réseau de communication radio à identification par radiofréquence (RFID) dans une zone étendue dans l'espace dans laquelle plusieurs étiquettes RFID (15) établissent une communication radio (5, 16) avec un lecteur (6), étant précisé que dans la zone du système RFID est disposée au moins une étiquettes RFID de référence (4), fixe, qui établit une communication radio cyclique (5) avec le lecteur (6) et dont les données sont comparées dans un central (13) à des données envoyées précédemment,
**caractérisé en ce qu'**un champ de marqueur qui génère un composant local supplémentaire est surveillé grâce à l'étiquette RFID de référence (4).

9. Dispositif pour la mise en oeuvre du procédé selon l'une au moins des revendications 1 à 7, **caractérisé en ce que** grâce à l'analyse des données de l'étiquette RFID de référence (4) dans le central (13), la capacité de fonctionnement d'antennes (7, 8), la capacité de fonctionnement du lecteur (6) et la capacité de fonctionnement des lignes de câbles (9, 10), des composants de réseau (11, 12) et des composants du central (13) sont aptes à être vérifiées.
